## Europäisches Patentamt

## European Patent Office

## Office européen des brevets

(19)

(11) Veröffentlichungsnummer: **0 209 188**
**B1**

(12) **EUROPÄISCHE PATENTSCHRIFT**

(45) Veröffentlichungstag der Patentschrift:
**15.03.89**

(51) Int. Cl.⁴: **H02M 3/335**

(21) Anmeldenummer: **86201194.7**

(22) Anmeldetag: **08.07.86**

(54) Getakteter Gleichspannungswandler.

(30) Priorität: **11.07.85 DE 3524767**

(43) Veröffentlichungstag der Anmeldung:
**21.01.87 Patentblatt 87/4**

(45) Bekanntmachung des Hinweises auf die Patenterteilung:
**15.03.89 Patentblatt 89/11**

(84) Benannte Vertragsstaaten:
**AT CH DE FR GB LI SE**

(56) Entgegenhaltungen:
**EP-A- 0 123 030**
**DE-A- 3 040 491**

(73) Patentinhaber: **Philips Patentverwaltung GmbH,**
**Wendenstrasse 35 Postfach 10 51 49,**
**D-2000 Hamburg 1(DE)**

(84) Benannte Vertragsstaaten: **DE**

(73) Patentinhaber: **N.V. Philips' Gloeilampenfabrieken,**
**Groenewoudseweg 1, NL-5621 BA Eindhoven(NL)**

(84) Benannte Vertragsstaaten: **CH FR GB LI SE AT**

(72) Erfinder: **Kettschau, Hans-Jürgen, Dipl.-Ing.,**
**Lindenstrasse 18, D-8501 Eckenhaid(DE)**

(74) Vertreter: **Peuckert, Hermann, Dipl.-Ing. et al, Philips**
**Patentverwaltung GmbH**
**Wendenstrasse 35 Postfach 10 51 49,**
**D-2000 Hamburg 1(DE)**

ACTORUM AG

**Beschreibung**

Die Erfindung betrifft einen getakteten Gleichspannungswandler mit Potentialtrennung, bei dem auf der Primärseite eine Regelschaltung zur Steuerung der Einschaltzeiten eines Schalttransistors angeordnet ist, bei dem die zu einer Ausgangsgröße proportionale Spannung mit einem steuerbaren Schalter zerhackt, die zerhackte Spannung durch einen Übertrager auf die Primärseite übertragen, danach gleichgerichtet, gesiebt und der Regelschaltung zugeführt wird.

Ein derartiger Gleichspannungswandler ist aus der europäischen Patentanmeldung EP 0 123 030 bekannt. Bei dem bekannten Gleichspannungswandler wird der steuerbare Schalter, mit dem die Ausgangsspannung zerhackt wird, von der impulsförmigen Spannung angesteuert, die über den beiden Anschlüssen der Sekundärwicklung des Leistungsübertragers abfällt.

Die Ansteuerung des steuerbaren Schalters – in der EP 0 123 030 ein bipolarer Transistor – mit der ungesiebten Ausgangsspannung des Wandlers hat den Nachteil, daß die Schließ- und Öffnungszeiten des steuerbaren Schalters vom augenblicklichen Tastverhältnis – also von den Öffnungs- und Schließzeiten des Schalttransistors des Gleichspannungswandlers – abhängen. Mit kleiner werdendem Tastverhältnis wird die Regelung zunehmend ungenauer. Ist das Tastverhältnis null, wie z.B. beim Leerlauf am Ausgang des Wandlers, so kann bei dem bekannten Gleichspannungswandler keine Information mehr über die Ausgangsspannung auf die Primärseite übertragen werden. Die Ansteuerung des steuerbaren Schalters mit der ungesiebten Ausgangsspannung begrenzt daher den Regelbereich und die Regelgenauigkeit des bekannten Gleichspannungswandlers.

Der Erfindung liegt die Aufgabe zugrunde, einen Gleichspannungswandler der eingangs genannten Art anzugeben, dessen Regelbereich und Regelgenauigkeit gegenüber dem Regelbereich und der Regelgenauigkeit des bekannten Gleichspannungswandlers vergrößert sind.

Diese Aufgabe wird dadurch gelöst, daß ein weiterer Übertrager vorgesehen ist, der die Schwingung des Oszillators der Regelschaltung auf die Sekundärseite überträgt und daß mit dieser Schwingung der steuerbare Schalter angesteuert wird.

Durch die erfindungsgemäße Ansteuerung des steuerbaren Schalters sind dessen Öffnungs- und Schließzeiten unabhängig vom Tastverhältnis des Wandlers. Daher lassen sich bei allen Werten des Tastverhältnisses Informationen über die Ausgangsspannung des Wandlers auf die Primärseite übertragen.

Da der steuerbare Schalter mit einem Signal angesteuert wird, das immer synchron zu dem Signal ist, mit dem der Schalttransistor angesteuert wird, können eventuell auftretende Modulationsprodukte beider Signale keine mit der Zeit sich ändernde Frequenzabhängigkeit haben; die Unterdrückung solcher Modulationsprodukte ist daher mit einfachen Mitteln möglich.

Vorteilhafte Ausgestaltungen der Erfindung sind in den Unteransprüchen angegeben.

Anhand der Figur soll ein Ausführungsbeispiel der Erfindung näher erläutert werden. Die Figur zeigt einen Durchflußwandler mit der erfindungsgemäßen Ansteuerung des steuerbaren Schalters.

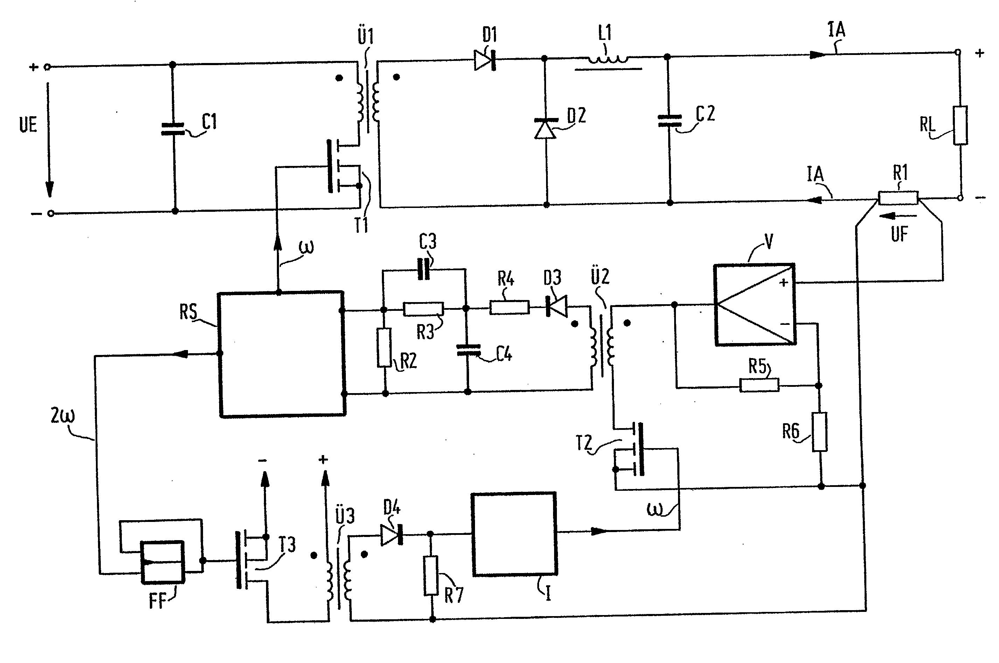

Der Durchflußwandler nach Fig. 1 wandelt eine Eingangsspannung UE in einen Ausgangsstrom IA um, wobei der Ausgangsstrom IA als Regelgröße verwendet wird. Primär- und Sekundärseite des Wandlers sind potentialmäßig voneinander getrennt. Für die Potentialtrennung beider Seiten sind drei Übertrager Ü1, Ü2 und Ü3 vorgesehen.

Im Primärkreis des Wandlers liegt ein Siebkondensator C1 und in Serie zur Primärwicklung des Übertragers Ü1 ein Schalttransistor T1. Im Sekundärkreis sind die Sekundärwicklung des Übertragers Ü1, zwei Dioden D1 und D2, eine Drossel L1 und ein weiterer Ladekondensator C2 in der üblichen Art angeordnet. Zwischen dem Kondensator C2 und einem Lastwiderstand RL liegt in einem Längszweig ein Widerstand R1 als Stromfühler. Die über dem Widerstand R1 abfallende und zum Ausgangsstrom proportionale Spannung UF wird durch einen über Widerstände R5 und R6 rückgekoppelten Verstärker V verstärkt. Die Ausgangsspannung des Verstärkers V fällt über der Serienschaltung der Primärwicklung des Übertragers Ü2 und der Kontaktstrecke eines steuerbaren Schalters T2 ab. Nach Fig. 1 ist dieser steuerbare Schalter ein Feldeffekt-Transistor T2, der durch eine Rechteck-schwingung mit der Frequenz $\omega$ und dem Tastverhältnis 1/2 geöffnet und geschlossen wird. Dadurch wird die Ausgangsspannung des Verstärkers V zerhackt, die zerhackte Spannung auf die Sekundärseite des Übertragers Ü2 übertragen, mit einer Diode D3 gleichgerichtet, von einem R-C-Tiefpaß R4, C4 gesiebt, über einen Spannungsteiler R2, R3, C3 geleitet, dessen einer Zweig aus einem Hochpaß R3, C3 besteht, und einer Regelschaltung RS zugeführt.

Der Hochpaß R3, C3 macht die Phasendrehung des Tiefpasses R4, C5 teilweise rückgängig und stabilisiert damit den Regelkreis des Wandlers.

Der Verstärker V wird von einer nicht eingezeichneten Hilfsspannungsquelle auf der Sekundärseite des Wandlers versorgt. Der Verstärker V dient der Verbesserung des Signal-Rauschabstandes der Regelgröße und der Entkopplung zwischen dem Stromfühler R1 und dem Schalter T2.

Die zum Ausgangsstrom IA des Wandlers proportionale Ausgangsspannung des Spannungsteilers R2, R3, C3 wird von der Regelschaltung RS weiter verarbeitet. Die Regelschaltung RS ist im wesentlichen ein handelsüblicher Baustein (z.B. der SG 1524) zum Steuern der Einschaltzeiten (Tastverhältnis) des Schalttransistors T1. Die Versorgungsspannungsquelle des Bausteines ist nicht eingetragen. Der Baustein enthält unter anderem einen Oszillator, der mit der doppelten Schaltfrequenz $2\omega$ schwingt.

Der Abgriff der Regelschaltung RS, an dem die Frequenz 2 anliegt, ist an den Takteingang eines rückgekoppelten Flip-Flops FF geführt, mit dem die Oszillatorschwingung auf ihre halbe Frequenz $\omega$

heruntergeteilt und ein konstantes Tastverhältnis von 1/2 eingestellt wird. Die Versorgungsspannungsquelle für das Flip-Flop FF ist ebenfalls nicht eingezeichnet. Das Herunterteilen der Oszillatorfrequenz 2ω auf die Frequenz ω erhöht die Stabilität des Gleichspannungswandlers. Maßnahmen zur Stabilität des Wandlers sind zunächst auf die Schaltfrequenz ω abgestellt; neue Gesichtspunkte kommen daher nicht ins Spiel, wenn keine anderen Arbeitsfrequenzen verwendet werden.

Schwankungen des Tastverhältnisses der Oszillatorschwingung, die wegen thermischer Effekte oder Schwankungen der Versorgungsspannungen auftreten, werden durch das Flip-Flop FF beseitigt; dadurch verbessert sich die Regelgenauigkeit des Wandlers.

Ein Ausgang des Flip-Flops FF ist an den Steuereingang eines als Feldeffekt-Transistor T3 ausgebildeten Schalters geführt, dessen Kontaktstrecke in Serie mit der Primärwicklung des dritten Übertragers Ü3 geschaltet ist. Die Serienschaltung liegt zwischen den beiden Anschlüssen einer durch die Zeichen + und − angedeuteten Spannungsquelle.

Mit der Frequenz ω wird nun der Strom durch die Primärwicklung des Übertragers Ü3 unterbrochen. Die auf der Sekundärseite des Übertragers Ü3 induzierten Impulse werden − wegen einer Diode D4 und eines Widerstandes R7 − als unipolare Impulsfolge an eine Impulsformerstufe I weitergeleitet. Der Ausgang der Impulsformerstufe I ist mit dem Steuereingang des als Schalter wirkenden Transistors T2 verbunden.

## Patentansprüche

1. Getakteter Gleichspannungswandler mit Potentialtrennung, bei dem auf der Primärseite eine Regelschaltung (RS) zur Steuerung und Regelung der Einschaltzeiten eines Schalttransistors (T1) angeordnet ist, bei dem die zu einer Ausgangsgröße proportionale Spannung mit einem steuerbaren Schalter (T2) zerhackt, auf die Primärseite übertragen, danach gleichgerichtet, gesiebt und der Regelschaltung zugeführt wird, dadurch gekennzeichnet, daß ein weiterer Übertrager (Ü3) vorgesehen ist, der die Schwingung des Oszillators der Regelschaltung (RS) auf die Sekundärseite überträgt und daß mit dieser Schwingung der steuerbare Schalter (T2) angesteuert wird.

2. Getakteter Gleichspannungswandler nach Anspruch 1, dadurch gekennzeichnet, daß ein Frequenzteiler (FF) zwischen dem Oszillator der Regelschaltung (RS) und der Primärwicklung des weiteren Übertragers (Ü3) angeordnet ist und daß der Frequenzteiler (FF) die Frequenz der Schwingung des Oszillators auf die Schaltfrequenz des Schalttransistors (T1) herunterteilt.

3. Getakteter Gleichspannungswandler nach Anspruch 1 oder 2, dadurch gekennzeichnet, daß die übertragene Schwingung vor Ansteuerung des steuerbaren Schalters (T2) eine Impulsformerstufe (I) zur Versteilerung der Flanken durchläuft.

4. Getakteter Gleispannungswandler nach einem der Ansprüche 1, 2 oder 3, dadurch gekennzeichnet, daß nach der Siebung der zur Ausgangsgröße (IA) proportionalen Spannung (UF) auf der Primärseite eine Korrektur des Phasenganges durch einen Spannungsteiler (R2, R3, C3) erfolgt, dessen einer Zweig als Hochpaß (R3, C3) ausgebildet ist.

5. Getakteter Gleichspannungswandler nach einem der vorhergehenden Ansprüche, dadurch gekennzeichnet, daß die zur Ausgangsgröße (IA) proportionale Spannung (UF) einen Verstärker (V) mit hochohmigem Eingangswiderstand durchläuft.

## Claims

1. A clocked direct voltage converter with potential separation, in which a control circuit (RS) for controlling and regulating the switching-on times of a switching transistor (T1) is arranged on the primary side, in which transistor the voltage proportional to an output quantity is chopped by a controllable switch (T2), is transmitted to the primary side, is then rectified, is filtered and is supplied to the control circuit, characterized in that a further transmitter (Ü3) is provided, which transmits the oscillation of the oscillator of the control circuit (RS) to the secondary side and in that the controllable switch (T2) is controlled by means of this oscillation.

2. A clocked direct voltage converter as claimed in Claim 1, characterized in that a frequency divider (FF) is arranged between the oscillator of the control circuit (RS) and the primary winding of the further transmitter (Ü3) and in that the frequency divider (FF) divides the frequency of the oscillation of the oscillator down to the switching frequency of the switching transistor (T1).

3. A clocked direct voltage converter as claimed in Claim 1 or 2, characterized in that the transmitted oscillation, before the controllable switch (T2) is controlled, passes through a pulse shaper stage (I) for steepening the edges.

4. A clocked direct voltage converter as claimed in any one of Claims 1, 2 or 3, characterized in that, after the voltage (UF) proportional to the output quantity (IA) has been filtered, a correction of the phase characteristic takes place on the primary side by means of a voltage divider (R2, R3, C3), whose one branch is in the form of a high-pass filter (R3, C3).

5. A clocked direct voltage converter as claimed in any one of the preceding Claims, characerized in that the voltage (UF) proportional to the output quantity (IA) passes through an amplifier (V) having a high-ohmic input resistance.

## Revendications

1. Convertisseur de courant continu à mode de commutation à isolation électrique, dans lequel, du côté primaire, est disposé un circuit de régulation (RS) pour la commande et la régulation du temps de fermeture d'un transistor de commutation (T1), dans lequel la tension proportionnelle à une grandeur de sortie est hachée au moyen d'un commutateur pouvant être commandé (T2), transmise au primaire, puis redressée, filtrée et appliquée au circuit de régulation, caractérisé en ce qu'il est prévu:

un autre transformateur (Ü3) qui transmet l'oscillation de l'oscillateur du curcuit de régulation (RS) au secondaire et que le commutateur pouvant être commandé (T2) est activé à l'aide de cette oscillation.

2. Convertisseur de courant continu à mode de commutation suivant la revendication 1, caractérisé en ce qu'un diviseur de fréquence (FF) est installé entre l'oscillateur du circuit de régulation (RS) et l'enroulement primaire de l'autre transformateur (Ü3) et que le diviseur de fréquence (FF) ramène la fréquence de l'oscillation de l'oscillateur à la fréquence de commutation du transistor de commutation (T1).

3. Convertisseur de courant continu à mode de commutation suivant la revendication 1 ou 2, caractérisé en ce qu'avant l'activation du commutateur pouvant être commandé (T2), l'oscillation transmise traverse un étage conformateur d'impulsions (I) destiné à rendre les flancs plus abrupts.

4. Convertisseur de courant continu à mode de commutation suivant l'une quelconque des revendication 1, 2 ou 3, caractérisé en ce qu'après le filtrage de la tension (UF) proportionnelle à la grandeur de sortie (IA) sur le primaire, une correction de la réponse en phase est assurée par un diviseur de tension (R2, R3, C3), dont une branche a la forme d'un filtre passe-haut (R3, C3).

5. Convertisseur de courant continu à mode de commutation suivant l'une quelconque des revendications précédentes, caractérisé en ce que la tension (UF) proportionnelle à la grandeur de sortie (IA) traverse un amplificateur (V) à résistance d'êntrée de haute valeur ohmique.